# EUROPÄISCHE PATENTSCHRIFT

(11) **EP 0 555 558 B1**
(45) Veröffentlichungstag und Bekanntmachung des Hinweises auf die Patenterteilung: **13.09.1995**
(21) Anmeldenummer: 92122158.6
(22) Anmeldetag: 31.12.1992
(51) Int. Cl.: F16L 55/10, B67D 5/32, B67D 5/37

(54) **Vorrichtung zum Ankuppeln einer Kraftstoff-Zapfpistole an einen Zapfschlauch**
Device for coupling a fuelling gun to a hose
Dispostif d'accouplement d'un pistolet de distribution de carburant sur un tuyau

(30) Priorität: 01.02.1992 DE 4202956
(43) Veröffentlichungstag der Anmeldung: 18.08.1993
(73) Patentinhaber: ALBERT HIBY GmbH & Co. KG, D-58840 Plettenberg (DE)
(72) Erfinder: Meyer-Berg, Heinz-Ulrich, Dipl.-Ing., W-5970 Plettenberg (DE); Jaeger, Gerhard, Dipl.-Ing., W-5974 Herscheid (DE); Ehlers, Karlheinz, W-2000 Hamburg-Hochkamp (DE)
(74) Vertreter: Andrejewski, Walter

(56) Entgegenhaltungen:
- US-A- 4 269 226
- US-A- 4 800 913
- US-A- 4 899 792

## Beschreibung

Die Erfindung betrifft eine Vorrichtung zum Ankuppeln einer Kraftstoff-Zapfpistole an einen Zapfschlauch einer Kraftstoff-Zapfsäule, mit einem Aggregat aus zapfpistolenseitigem Kupplungsmutterteil. zapfschlauchseitigem Kupplungsvaterteil und einer Ausrasteinrichtung, wobei die Ausrasteinrichtung einen Rastring aufweist, der bei in das Kupplungsmutterteil eingeführtem Kupplungsvaterteil einerseits in einer Rastringaufnahme des Kupplungsmutterteils und andererseits in einer Rastringaufnahme des Kupplungsvaterteils einliegt sowie die Zapffunktionsstellung festlegt und wobei dieser Rastring ausrastbar ist, wenn ein Kraftfahrzeug aus einer Betankungsstellung mit in den Betankungsstutzen eines Kraftfahrzeugtanks eingeführter Zapfpistole bestimmungswidrig abfährt. Im eingeführten Zustand liegt das Kupplungsvaterteil mit einem Bund an der Stirnfläche des Kupplungsmutterteils an. - Der Rastring ist zumeist ein sogenannter Seegering. Regelmäßig, aber nicht zwingend, besitzt die Vorrichtung zusätzlich ein Gelenk mit einer quer zur Strömungsrichtung verlaufenden, beim Betankungsgebrauch mehr oder weniger horizontalen Gelenkachse, welches in das Kupplungsmutterteil integriert ist und ein Abschwenken der Zapfpistole gegenüber dem Kupplungsvaterteil erlaubt und so die Handhabung der Zapfpistole erleichtert. Bei Zapfsäulen mit Gasabsaugung und einem Zapfschlauch mit Außenschlauch für die KraftstoffFührung und Innenschlauch für eine Gasabsaugung entspricht der grundsätzliche Aufbau der vorstehenden Beschreibung, jedoch befindet sich im Kupplungsmutterteil eine ausrastbare Steckkupplung für den Anschluß des Innenschlauches, die ausrastet, wenn der Rastring ausrastet.

Bei der aus der Praxis bekannten Ausführungsform, von der die Erfindung ausgeht, reagiert die Ausrasteinrichtung auf Zugbeanspruchungen, die, bezogen auf das in das Kupplungsmutterteil eingeführte Kupplungsvaterteil, in axialer Richtung wirken. Das kann nicht verhindern, daß ein Kraftfahrzeug, welches aus einer Betankungsstellung mit in den Betankungsstutzen des Kraftfahrzeugtanks eingeführten Zapfventil bestimmungswidrig so abfährt, daß das Aggregat aus Kupplungsmutterteil und Kupplungsvaterteil gleichsam wegen Schrägzug des Zapfschlauches ein Moment aufzunehmen hat. Dieses Moment kann, wenn auch die Zugbeanspruchung eine im Sinne der obigen Ausführungen axiale Komponente aufweist, die Ausrasteinrichtung blockieren. Das weiterfahrende Kraftfahrzeug kann dann den Zapfschlauch abreißen oder sogar die angeschlossene Zapfsäule umreißen. Daran ändert auch ein in das Kupplungsmutterteil integriertes Gelenk nichts, wenn die Achse des Moments nicht prallel zur Gelenkachse verläuft und/oder der Gelenkfreiheitsgrad ausgeschöpft ist.

Der Erfindung liegt die Aufgabe zugrunde, eine Vorrichtung des eingangs beschriebenen Aufbaus und der eingangs beschriebenen Funktion so weiter auszubilden, daß die Funktion der Ausrasteinrichtung auch dann sichergestellt ist, wenn das Kraftfahrzeug aus der Betankungsstellung bestimmungswidrig so abfährt, daß das Aggregat aus Kupplungsmutterteil und Kupplungsvaterteil der in den Betankungsstutzen eingeführten Zapfpistole ein Moment aufzunehmen hat.

Zur Lösung dieser Aufgabe lehrt die Erfindung, daß zwischen Kupplungsmutterteil und Kupplungsvaterteil im Bereich des zapfpistolenseitigen Endes des Kupplungsvaterteils ein Abwinkelungsspiel und eine Rückstellfeder eingerichtet sind, welche Rückstellfeder im abwinkelungsmomentfreien Zustand des Aggregates das Kupplungsmutterteil und das Kupplungsvaterteil koaxial einstellt, und daß die Rückstellfeder durch ein Abwinkelungsmoment überwindbar und danach der Rastring aus der Rastringaufnahme sowie das Kupplungsvaterteil aus dem Kupplungsmutterteil aushebelbar ist, Die Funktion der Rückstellfeder ist auch die einer Paßfeder, welche die Zapffunktionsstellung fixiert, Es versteht sich, daß die bei den eingangs beschriebenen bekannten Vorrichtungen üblichen Dichtungsringe in Form von Weichdichtungsringen zwischen Kupplungsmutterteil und Kupplungsvaterteil angeordnet sind. Die Rückstellfeder kann auf verschiedene Art und Weise ausgebildet sein, so lange sie die beschriebenen Funktionen erfüllt. Sie kann auch aus mehreren einzelnen Federn oder Federbauteilen bestehen. Nach bevorzugter Ausführungsform der Erfindung ist die Rückstellfeder als das Kupplungsvaterteil umfassende Ringfeder ausgebildet. Sie kann in diesem Falle einfach gefertigt und montiert werden. Zweckmäßigerweise ist dabei die Anordnung so getroffen, daß die Rückstellfeder ein im Radialschnitt U-förmiges Profil aufweist, welches zapfpistolenseitig geschlossen ist. Die in der beschriebenen Art und Weise aufgebaute Rückstellfeder kann so eingerichtet und eingebaut sein, daß sie gleichzeitig eine Dichtungsfunktion erfüllt. Sie kann aus einem ausreichend steifen gummielastischen Werkstoff, z. B. aus Kunststoff, bestehen. Wie bereits erwähnt ist die erfindungsgemäße Vorrichtung mit den üblichen Dichtungen in Form von Weichdichtungsringen ausgerüstet. In diesem Zusammenhang ist eine bevorzugte Ausführungsform der Erfindung dadurch gekennzeichnet, daß im Bereich der Ringfeder zumindest zwei Dichtungsringe vorgesehen sind, deren einer in einer umlaufenden Nut des Kupplungsvaterteils und deren anderer in einer umlaufenden Nut des Kupplungsmutterteils angeordnet ist und die beide an der Ringfeder anliegen.

Eine andere Ausführungsform der Erfindung ist dadurch gekennzeichnet, daß die Rückstellfeder durch eine federnde Ausbildung des Kupplungsmutterteils im Bereich des eingeführten Kupplungsvaterteils eingerichtet ist.

Die erreichten Vorteile sind darin zu sehen, daß bei der erfindungsgemäßen Vorrichtung die Funktion der Ausrasteinrichtung auch dann sichergestellt wird, wenn das Kraftfahrzeug aus einer Betankungsstellung bestimmungswidrig abfährt. Von besonderem Vorteil ist die Tatsache, daß die bei den bekannten normierten Zapfpistolen üblichen Vorrichtungen zum Ankuppeln der Zapfpistole an den Zapfschlauch auf einfache Weise in eine erfindungsgemäße Vorrichtung umgerüstet werden können, und zwar dadurch, daß bei Verwirklichung der Lehre der Erfindung das mit der Zapfpistole verbundene Kupplungsmutterteil unverändert bleibt sowie das Abwicklungsspiel und, damit zusammenhängend, die Aufnahme für die Rückstellfeder an dem Kupplungsvaterteil ausgebildet werden. Ist, wie eingangs beschrieben, im Kupplungsmutterteil eine Steckkupplung für den Innenschlauch eines als koaxial ausgebildeten Zapfschlauches vorgesehen, so rastet diese unter der Einwirkung des Abwinkelungsmomentes, ohne daß die Steckkupplung verändert werden müßte, mit aus.

Im folgenden wird die Erfindung anhand einer lediglich ein Ausführungsbeispiel darstellenden Zeichnung ausführlicher erläutert. Es zeigen
- Fig. 1: die Seitenansicht einer Zapfpistole mit erfindungsgemäßer Vorrichtung und Zapfschlauch, teilweise aufgeschnitten.
- Fig. 2: in gegenüber der Fig. 1 vergrößertem Maßstab einen Ausschnitt aus der Fig. 1 mit der erfindungsmäßen Vorrichtung im gekuppelten Zustand.
- Fig. 3: in nochmaliger Vergrößerung den Ausschnitt A aus dem Gegenstand nach Fig. 1,
- Fig. 4: den Gegenstand nach Fig. 3 in anderer Funktionsstellung und
- Fig. 5: den Gegenstand nach Fig. 4 in nochmals anderer Funktionsstellung.

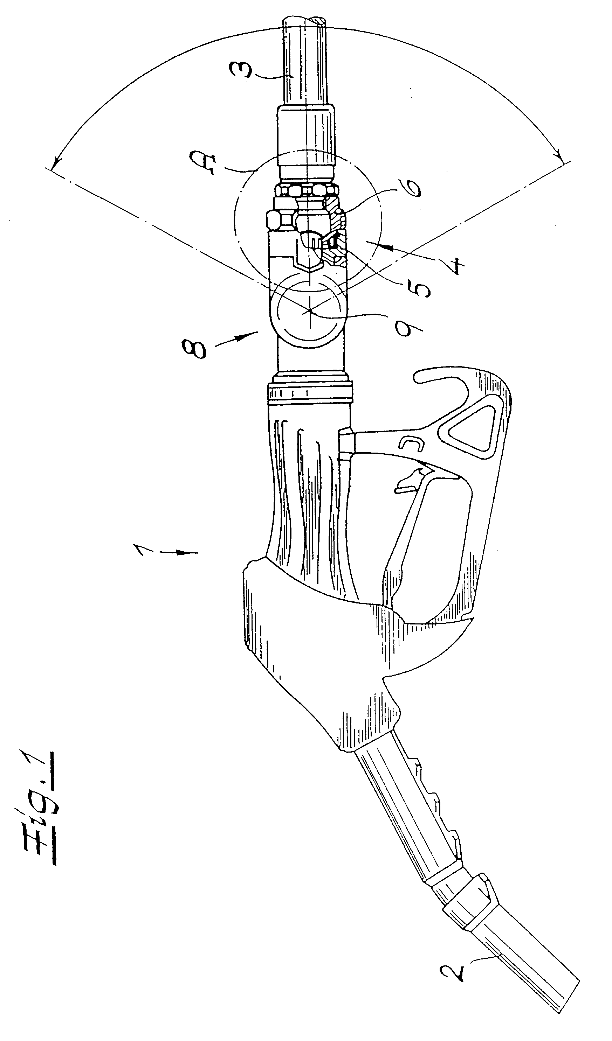

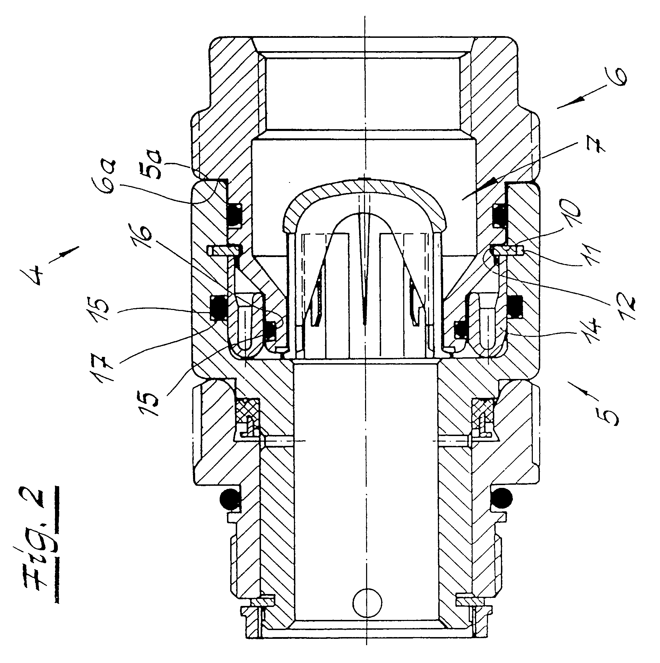

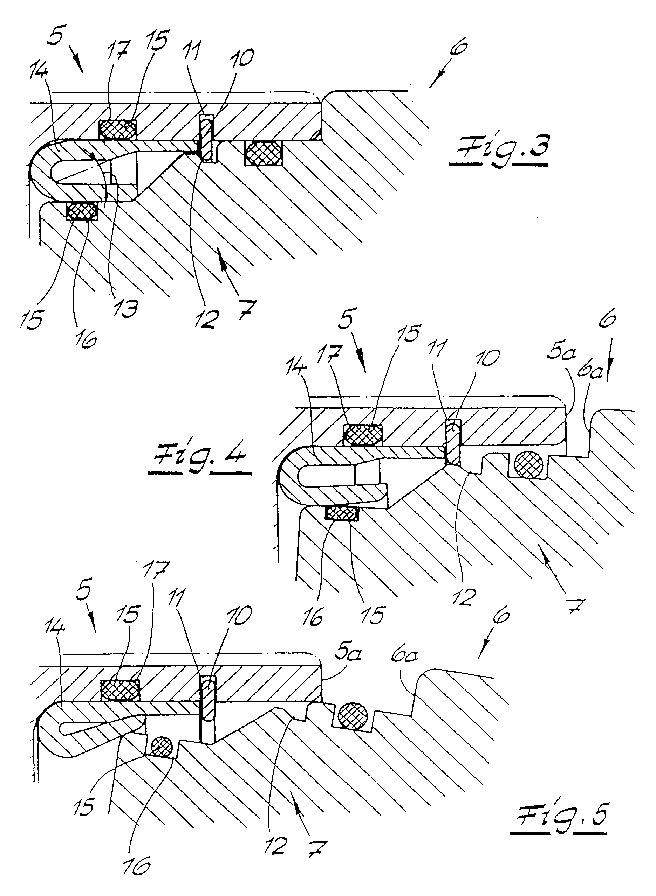

Die in der Fig. 1 dargestellte Zapfpistole 1 ist zum Betanken von Kraftfahrzeugtanks üblich. Der Rüssel 2 der Zapfpistole 1 wird in den Kraftfahrzeugtank eingeführt. Der an die Zapfpistole 1 angeschlossene Zapfschlauch 3 führt zur Zapfsäule. Zwischen dem Zapfschlauch 3 und der eigentlichen Zapfpistole 1 befindet sich eine Vorrichtung 4 zum Ankuppeln der Zapfpistole 1 an den Zapfschlauch 3. Man erkennt ein zapfpistolenseitiges Kupplungsmutterteil 5, ein zapfschlauchseitiges Kupplungsvaterteil 6 sowie eine Ausrasteinrichtung 7. Diese Bauteile bilden ein einheitlich funktionierendes Aggregat. Es besitzt im Ausführungsbeispiel zusätzlich ein Gelenk 8, dessen Gelenkfreiheitsgrad durch einen Bogenpfeil in Fig. 1 angedeutet worden ist. Die Gelenkachse 9 steht senkrecht zur Zeichenebene der Fig. 1 und kann folglich einem Moment, dessen Momentachse in der Zeichenebene liegt, nicht folgen. Die Ausrasteinrichtung 7 besitzt einen Rastring 10, der bei in das Kupplungsmutterteil 5 eingeführtem Kupplungsvaterteil 6 einerseits in einer Rastringaufnahme 11 des Kupplungsmutterteils 5 und andererseits in einer Rastringaufnahme 12 des Kupplungsvaterteils 6 einliegt sowie die Zapffunktionsstellung fixiert. Insoweit wird Insbesondere auf die Fig. 2 und 3 verwiesen. Der Rastring 10 ist ausrastbar, wenn ein Kraftfahrzeug aus einer Betankungsstellung mit in den Betankungsstutzen eines Kraftfahrzeugtanks eingeführter Zapfpistole 1 bestimmungswidrig abfährt. Aus einer vergleichenden Betrachtung der Fig. 3 bis 5 entnimmt man, daß zwischen Kupplungsmutterteil 5 und Kupplungsvaterteil 6 im Bereich des zapfpistolenseitigen Endes des Kupplungsvaterteils 6 ein Abwinkelungsspiel 13 eingerichtet ist und daß eine Rückstellfeder 14 angeordnet ist. Die Rückstellfeder 14 stellt im abwinkelungsmomentfreien Zustand des Aggregates das Kupplungsmutterteil 5 und das Kupplungsvaterteil 6 koaxial zueinander ein. Die Anordnung ist jedoch im übrigen so getroffen, daß die Rückstellfeder 14 durch ein Abwinkelungsmoment überwindbar und danach der Rastring 10 aus den Rastringaufnahmen 11, 12 sowie das Kupplungsvaterteil 6 aus dem Kupplungsmutterteil 5 aushebelbar sind. Es versteht sich, daß dabei das Abwinkelungsmoment über den Bund 6a am Kupplungsvaterteil 6 an der Stirnfläche 5a des Kupplungsmutterteils abgestützt wird. Die Abstützung erfolgt auf der Seite, die der in den Fig. 4 und 5 gezeichneten gegenüberliegt. Sind sie ausgehebelt, so kann der Zapfschlauch 3 nicht mehr abgerissen und kann eine angeschlossene Zapfsäule nicht mehr umgerissen werden, auch wenn das Kraftfahrzeug weiterfährt. - Man erkennt in den Zeichnungen auch die üblichen Dichtungsringe 15 in Form von Weichdichtungsringen zwischen Kupplungsmutterteil 5 und Kupplungsvaterteil 6.

Im Ausführungsbeispiel und nach bevorzugter Ausführungsform der Erfindung ist die Rückstellfeder 14 als das Kupplungsvaterteil 6 umfassende Ringfeder ausgebildet. Sie besitzt im Ausführungsbeispiel ein U-förmiges Profil, welches zapfpistolenseitig geschlossen ist. In den Fig. 2 bis 5 erkennt man deutlich diesen U-förmigen Profilquerschnitt. Die Rückstellfeder 14 mag aus Kunststoff bestehen. Im Bereich der Rückstellfeder 14 sind zumindest zwei Dichtungsringe 15 vorgesehen. Einer dieser Dichtungsringe 15 liegt in einer umlaufenden Nut 16 des Kupplungsvaterteils 6. Der andere liegt in einer umlaufenden Nut 17 des Kupplungsmutterteils 5. Beide liegen an der Rückstellfeder 14 an.

Man entnimmt aus den Figuren, daß eine als besonderes Bauteil ausgeführte Rückstellfeder 14 nicht erforderlich ist, wenn die Aufnahme für das Kupplungsvaterteil 6 im Kupplungsmutterteil 5 ausreichend verformbar, vorzugsweise federn verformbar, ausgebildet ist.

In der Fig. 3 erkennt man das Abwinkelungsspiel 13. Aus einer vergleichenden Betrachtung der Fig. 3 bis 5 entnimmt man, wie unter der Einwirkung eines Abwinkelungsmomentes, welches mit der eingangs schon beschriebenen Momentachse angreift, ein Aushebeln des Rastringes 10 und damit ein Aushebeln des Kupplungsvaterteils 6 aus dem Kupplungsmutterteil 5 heraus erfolgt. Beim Aushebeln erfolgt zwischen der Stirnfläche 5a am Kupplungsmutterteil 5 und dem Bund 6a am Kupplungsvaterteil 6 die schon beschriebene Abstützung des Abwinkelungsmomentes. Es versteht sich, daß in dem Kupplungsvaterteil 5 oder in dem Zapfschlauch 3 ein Ventil angeordnet ist, welches ein Auslaufen von Kraftstoff aus dem freigewordenen Ende des Zapfschlauches 3 verhindert.

## Patentansprüche

1. Vorrichtung zum Ankuppeln einer Kraftstoff-Zapfpistole an einen Zapfschlauch einer Kraftstoff-Zapfsäule, - mit einem Aggregat aus
zapfpistolenseitigem Kupplungsmutterteil (5),
zapfschlauchseitigem Kupplungsvaterteil (6) und
einer Ausrasteinrichtung (7),
wobei die Ausrasteinrichtung einen Rastring (10) aufweist, der bei in das Kupplungsmutterteil (5) eingeführtem Kupplungsvaterteil (6) einerseits in einer Rastringaufnahme (11) des Kupplungsmutterteils und andererseits in einer Rastringaufnahme (12) des Kupplungsvaterteils einliegt sowie die Zapffunktionsstellung festlegt und wobei dieser Rastring (10) ausrastbar ist, wenn ein Kraftfahrzeug aus einer Betankungsstellung mit in den Betankungsstutzen eines Kraftfahrzeugtanks eingeführter Zapfpistole bestimmungswidrig abfährt, **dadurch gekennzeichnet,** daß zwischen Kupplungsmutterteil (5) und Kupplungsvaterteils (6) im Bereich des zapfpistolenseitigen Endes des Kupplungsvaterteils (6) ein Abwinkelungsspiel (13) eingerichtet ist und eine Rückstellfeder (14) angeordnet sind,
welche Rückstellfeder im abwinkelungsmomentfreien Zustand des
Aggregates das Kupplungsmutterteil (5) und das Kupplungsvaterteil (6) koaxial einstellt, und
daß die Rückstellfeder durch ein Abwinkelungsmoment überwindbar und danach der Rastring (10) aus der Rastringaufnahme (11, 12) sowie das Kupplungsvaterteil (6) aus dem Kupplungsmutterteil (5) aushebelbar sind.

2. Vorrichtung nach Anspruch 1, dadurch gekennzeichnet, daß die Rückstellfeder (14) als das Kupplungsvaterteil (6) umfassende Ringfeder ausgebildet ist.

3. Vorrichtung nach einem der Ansprüche 1 oder 2, dadurch gekennzeichnet, daß die Rückstellfeder (14) ein im Radialschnitt U-förmiges Profil aufweist, welches zapfpistolenseitig geschlossen ist.

4. Vorrichtung nach einem der Ansprüche 1 bis 3, dadurch gekennzeichnet, daß die Rückstellfeder (14) aus Kunststoff geformt ist.

5. Vorrichtung nach Anspruch 1, dadurch gekennzeichnet, daß die Rückstellfeder durch eine federnde Ausbildung des Kupplungsmutterteils (5) im Bereich des eingeführten Kupplungsvaterteils (6) eingerichtet ist.

6. Vorrichtung nach einem der Ansprüche 2 bis 4, dadurch gekennzeichnet, daß im Bereich der Rückstellfeder (14) zumindest zwei Dichtungsringe (15) vorgesehen sind, deren einer in einer umlaufenden Nut des Kupplungsvaterteils (6) und deren anderer in einer umlaufenden Nut des Kupplungsmutterteils (5) angeordnet ist und die beide an der Rückstellfeder (14) anliegen.

## Claims

1. An apparatus for coupling a motor fuel pump nozzle to a motor fuel pump hose of a motor fuel pump, having a unit comprising
a female coupling part (5) on the motor fuel pump nozzle,
a male coupling part (6) on the motor fuel pump hose, and
a release device (7),
wherein the release device has a locking ring (10) which, when the male coupling part (6) is introduced into the female coupling part (5), is situated firstly in a locking ring seating (11) in the female coupling part and secondly in a locking ring seating (12) in the male coupling part, and also determines the pump operating position, and wherein this locking ring (10) can be released when a motor vehicle unintentionally departs from a refuelling position with the motor fuel pump nozzle inserted in the refuelling inlet pipe of a motor vehicle fuel tank, characterised in that a bending clearance (13) is built in and a pull-back spring (14) is disposed between the female coupling part (5) and the male coupling part (6) in the region of the end of the male coupling part (6) on the motor fuel pump nozzle side,
which pull-back spring adjusts the female coupling part (5) and the male coupling part (6) coaxially when the unit is in a state free from a bending moment, and
that the pull-back spring can be overcome by a bending moment and thereafter the locking ring (10) can be levered out of the locking ring seating (11, 12) and the male coupling part (6) can be levered out of the female coupling part (5).

2. An apparatus according to claim 1, characterised in that the pull-back spring (14) is constructed as an annular spring surrounding the male coupling part (6).

3. An apparatus according to either one of claims 1 or 2, characterised in that the pull-back spring (14) has a profile which is U-shaped in radial section, and which is closed on the motor fuel pump nozzle side.

4. An apparatus according to any one of claims 1 to 3, characterised in that the pull-back spring (14) is fashioned from plastics.

5. An apparatus according to claim 1, characterised in that the pull-back spring is established by a resilient formation on the female coupling part (5) in the region of the inserted male coupling part (6).

6. An apparatus according to any one of claims 2 to 4, characterised in that at least two sealing rings (15) are provided in the region of the pull-back spring (14), one of which is disposed in an encircling groove of the male coupling part (6) and the other of which is disposed in an encircling groove of the female coupling part (5), and which are both seated against the pull-back spring (14).

## Revendications

1. Dispositif pour accoupler un pistolet de distribution de carburant avec un tuyau de distribution d'un poste de distribution de carburant, comprenant un ensemble constitué d'une partie femelle d'accouplement (5) située du côté du pistolet de distribution, d'une partie mâle d'accouplement (6) située du côté du tuyau de distribution, et d'un dispositif de déboîtement (7), le dispositif de déboîtement comportant une bague d'arrêt (10) qui, lorsque la partie mâle d'accouplement (6) est introduite dans la partie femelle d'accouplement (5), est insérée, d'une part, dans un logement de bague d'arrêt (11) de la partie femelle d'accouplement et, d'autre part, dans un logement de bague d'arrêt (12) de la partie mâle d'accouplement et qui définit la position de distribution, ladite bague d'arrêt (10) pouvant se déboîter si un véhicule automobile quitte une position de ravitaillement alors que le pistolet de distribution est introduit dans la tubulure de remplissage de son réservoir, caractérisé en ce qu'un jeu de pivotement (13) est ménagé et un ressort de rappel (14) est disposé entre la partie femelle d'accouplement (5) et la partie mâle d'accouplement (6) dans la zone extrême de la partie mâle d'accouplement (6) située du côté du pistolet de distribution, ledit ressort de rappel maintenant la partie femelle d'accouplement (5) et la partie mâle d'accouplement (6) en position coaxiale lorsque l'ensemble n'est pas soumis à un couple de pivotement, et en ce que le ressort de rappel peut être surmonté par un couple de pivotement, après quoi la bague d'arrêt (10) peut sortir du logement de bague d'arrêt (11, 12) et la partie mâle d'accouplement (6) peut sortir de la partie femelle d'accouplement (5).

2. Dispositif selon la revendication 1, caractérisé en ce que le ressort de rappel (14) est conçu sous la forme d'un ressort annulaire entourant la partie mâle d'accouplement (6).

3. Dispositif selon l'une des revendications 1 ou 2, caractérisé en ce que le ressort de rappel (14) présente, en coupe radiale, un profil en U qui est fermé du côté du pistolet de distribution.

4. Dispositif selon l'une des revendications 1 à 3, caractérisé en ce que le ressort de rappel (14) est moulé en matière plastique.

5. Dispositif selon la revendication 1, caractérisé en ce que le ressort de rappel est constitué par la partie femelle d'accouplement (5) qui présente une conception élastique dans la zone de la partie mâle d'accouplement (6) qui y est introduite.

6. Dispositif selon l'une des revendications 2 à 4, caractérisé en ce que, dans la zone du ressort de rappel (14), il est prévu au moins deux bagues d'étanchéité (15) dont l'une est disposée dans une rainure périphérique de la partie mâle d'accouplement (6) et l'autre dans une rainure périphérique de la partie femelle d'accouplement (5) et qui sont toutes deux appliquées contre le ressort de rappel (14).
